# FASCICULE DE BREVET EUROPEEN

(11) **EP 2 588 370 B1**
(45) Date de publication et mention de la délivrance du brevet: **15.05.2019**
(21) Numéro de dépôt: 11735898.6
(22) Date de dépôt: 17.06.2011
(51) Int. Cl.: B64D 29/06, B64D 29/08

(54) **NACELLE DE TURBOREACTEUR**
TURBOSTRAHL-TRIEBWERKSGONDEL
TURBOJET ENGINE NACELLE

(30) Priorité: 29.06.2010 FR 1055182
(43) Date de publication de la demande: 08.05.2013
(73) Titulaire: Safran Nacelles, 76700 Gonfreville-l'Orcher (FR); Safran Aircraft Engines, 75015 Paris (FR)
(72) Inventeur: HURLIN, Hervé, F-91430 Igny (FR); DEZEUSTRE, Nicolas, F-76600 Le Havre (FR); KERBLER, Olivier, F-92400 Courbevoie (FR); GALLET, François, F-75012 Paris (FR); DESJOYEAUX, Bertrand, F-76310 Sainte Adresse (FR)
(74) Mandataire: Gaillarde, Frédéric F. Ch.
(86) Numéro de dépôt international: PCT/FR2011/051387
(87) Numéro de publication internationale: WO 2012/001259

(56) Documents cités:
- EP-A1- 2 163 748
- WO-A1-96/11843
- FR-A1- 2 771 330
- GB-A- 2 274 490
- US-A- 4 132 069
- US-A1- 2006 145 001

## Description

La présente invention se rapporte à une nacelle de turboréacteur comprenant une section médiane destinée à entourer une soufflante du turboréacteur.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt, tel que par exemple, un système d'inversion de poussée.

Plus précisément, une nacelle présente généralement une structure comprenant une entrée d'air en amont du moteur, une section médiane destinée à entourer une soufflante du turboréacteur, et une section aval destinée à entourer la chambre de combustion du turboréacteur et abritant des moyens d'inversion de poussée.

La soufflante du turboréacteur se compose essentiellement d'un arbre rotatif portant une pluralité d'aubes. A leur extrémité radiale, les aubes sont entourées circonférentiellement par un carter.

Afin de pouvoir accéder au carter de la soufflante, la section médiane comprend généralement au moins deux capotages aptes à s'ouvrir radialement par pivotement autour d'une ligne charnière longitudinale supérieure située à proximité d'un axe du mât auquel doit être rattaché la nacelle.

En position de fermeture ces capotages sont verrouillés, sur une structure fixe ou l'un avec l'autre par un ensemble de verrous, le long d'une ligne de verrouillage longitudinale inférieure dans le cas d'une installation motrice sous voilure.

La présence de ces capotages dans la section médiane a un impact sur les chemins de reprise d'efforts entre les structures de la nacelle et de transmission de ceux-ci vers le mât puisque les principales lignes de transmission d'efforts sont localisées le long de la ligne charnière et de la ligne de verrouillage.

Une telle configuration n'est pas optimale dans le cas d'efforts circonférentiels à contenir, notamment, par exemple en cas d'incident de type perte d'aube.

Plus précisément, en cas de perte d'aube, l'entrée d'air se trouve soumise à des déplacements importants associées à des charges significatives. Classiquement, ces charges sont reprises par le carter de soufflante par l'intermédiaire d'une bride de liaison carter de soufflante / entrée d'air.

Ainsi, il existe un besoin pour une nacelle de turboréacteur comprenant une section médiane présentant des propriétés de passage d'efforts améliorées.

On pourra également noter à titre complémentaire qu'un mode d'ouverture par pivotement peut présenter des difficultés lorsque la nacelle est proche de la structure de l'avion, et notamment de l'aile. En effet, lors d'interventions de maintenance sur le turboréacteur, les demi-parties et capotages de la nacelle qui sont situés à proximité de l'aile ne peuvent être ouverts au-delà d'un certain angle, ceux-ci étant bloqués par l'aile ou plus généralement par la structure de l'avion.

De plus, une ouverture radiale des capotages nécessite la présence de vérins d'ouverture puissants à l'intérieur de la nacelle, ces vérins devant être aptes à supporter le poids des capotages ainsi que les efforts dûs aux rafales de vent au sol ou demi-parties, ainsi que de bielles permettant de sécuriser ces capotages et demi-parties en position ouverte. Ces éléments représentent un poids et un espace d'occupation importants.

Plusieurs types de nacelles selon l'état de la technique sont connues des documents WO 96/11843 A1, GB 2274490 A, FR 2771330 A1, US 4132069 A, EP 2163748 A1, US 2006/145001 A1.

Afin de pallier ces inconvénients, la présente invention se rapporte à une nacelle pour turboréacteur, comprenant une entrée d'air en amont du turboréacteur, une section médiane destinée à entourer une soufflante de turboréacteur et son carter, et une section aval, la section médiane étant réalisée à partir d'au moins une structure apte à assurer une continuité aérodynamique externe de la nacelle, ladite structure est liée à une paroi de l'entrée d'air de manière à former une structure non ouvrable par pivotement relativement à ladite paroi d'entrée d'air, ladite structure est liée à ladite paroi d'entrée d'air de manière amovible pour pouvoir être démontée en cas d'opération de maintenance, caractérisée en ce que ladite structure est liée à ladite paroi d'entrée d'air par l'intermédiaire :
- d'au moins une zone de flambage local apte à résister à des charges normales en vol mais flambant en cas de surcharges, et/ou
- d'une liaison souple apte à amortir les passages d'efforts de manière à limiter le passage de charges significatives, et/ou
- d'un ou plusieurs raidisseurs pour être reliées audit carter de soufflante.

Ainsi, en remplaçant les capots pivotant par des structures fixes démontables, celles-ci peuvent participer à la reprise d'efforts globale de l'ensemble de la section médiane. Les autres zones de passage d'efforts peuvent alors être allégées.

Par ailleurs, on notera qu'une telle adaptation de la section médiane nécessite peu d'équipements et pas de modification au niveau de l'équipement soufflante.

Avantageusement, la structure comprend une ou plusieurs trappes permettant un accès à l'intérieur de la nacelle situées à proximité d'une zone supérieure dite douze heures et / ou inférieure dite six heures et / ou sensiblement médiane. Les trappes permettent ainsi de conserver l'accès aux composants internes essentiels. Bien évidemment, en cas d'opération de maintenance importante, les structures seront démontées.

De manière préférentielle, la nacelle comprend deux structures notamment sensiblement cylindrique ou hémicylindriques en fonction de leur nombre, disposées de part et d'autre d'un axe sensiblement longitudinal de la nacelle.

De manière préférentielle, la structure est liée à une autre structure, notamment en partie inférieure.

De manière avantageuse, la section aval est équipée d'un dispositif d'inversion de poussée.

Un aspect important de l'invention est également de proposer une section médiane dont les structures sont liées à la section amont d'entrée d'air de manière à transmettre peu d'efforts à cette structure en cas de perte d'aube tout en étant capable de tenir les efforts des autres cas de charges.

Pour ce faire, selon un premier mode de réalisation, la structure est liée à la paroi d'entrée d'air au moyen de rivets ou vis et montées avec jeu entre ladite structure et ladite paroi d'entrée d'air.

Ainsi, ladite structure et ladite paroi d'entrée d'air peuvent glisser l'une par rapport à l'autre en cas de chargement important. La tension d'installation des fixations sera limitée conformément à cet objectif.

De manière avantageuse, la zone de flambage est associée à au moins un raidisseur, et plus particulièrement deux encadrant la zone de flambage.

Bien évidemment, l'intégrité de la structure sera toujours assurée même en cas de flambage partiel de celle-ci.

Ainsi, grâce à un tel découplage, les efforts seront repris par le carter de soufflante et la majorité des efforts ne sera pas transmis à la structure.

La présente invention sera mieux comprise à la lumière de la description détaillée qui suit en regard du dessin annexé dans lequel :
- la figure 1 est une représentation schématique en coupe longitudinale d'une demi nacelle de turboréacteur,
- la figure 2 est une représentation schématique d'une structure équipant la section médiane selon l'invention,
- les figures 3 à 6 présentent plusieurs modes de réalisation d'une liaison mécanique entre la structure de la figure 2 et la section d'entrée d'air de la nacelle de turboréacteur selon l'invention.

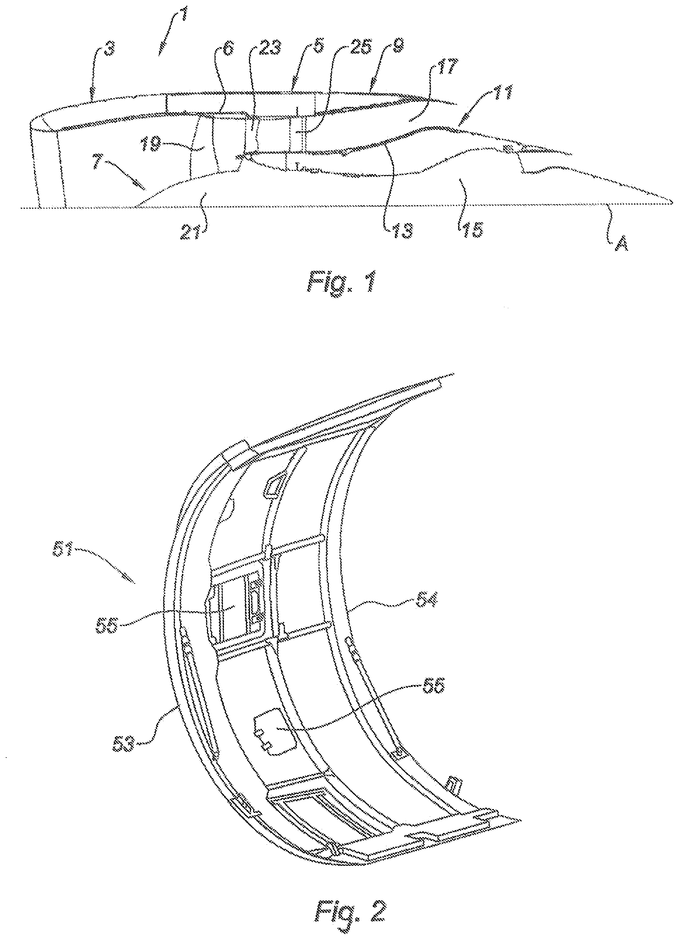

Comme cela est connu en soi, et représenté à la figure 1 ci-jointe, une nacelle 1 pour turboréacteur à double flux comprend classiquement une structure externe comportant une section amont 3 formant entrée d'air, une section médiane 5 dont une paroi interne est formée par un carter 6 d'une soufflante 7 du turboréacteur, et une section aval 9 pouvant incorporer des moyens d'inversion de poussée.

Cette nacelle 1 comporte par ailleurs une structure interne 11 comprenant un carénage 13 du moteur 15 du turboréacteur.

La structure externe de la nacelle 1 définit, avec la structure interne 11, une veine d'air annulaire 17, souvent désignée par « veine d'air froid », par opposition à l'air chaud engendré par le moteur 15.

La soufflante 7 consiste essentiellement en une hélice comportant une pluralité d'aubes 19, montée rotative sur un moyeu fixe 21 pouvant être relié au carter de soufflante 6 par une pluralité de bras fixes 25.

En amont de ces bras fixes se trouvent des aubes de redressement de flux 23 permettant de redresser le flux d'air froid engendré par la soufflante 7.

Conformément à l'invention et afin de pallier les problèmes évoqués précédemment, la section médiane présente une paroi externe réalisée à partir d'au moins une structure 51 telle que représentée sur la figure 2, montée rigidement entre la section amont 3 et la section aval 9 mais de manière démontable afin de former un capot fixe, amovible en cas d'opération de maintenance importante, mais non ouvrable par pivotement contrairement à l'art antérieur.

Plus précisément, le mode de réalisation décrit concerne une section médiane 5 réalisée à partir de d'une ou plusieurs structures 51 sensiblement reconstituant la forme extérieure de la nacelle disposées autour d'un axe sensiblement longitudinal de la nacelle 1. A titre d'exemple, dans la descrition ci-après, il est prévu deux structures.

Chaque structure 51 est liée est fixée, d'une part, en partie haute, à un pylône ou à une interface de pylône, ou encore à une poutre longitudinale supérieure, par exemple, à l'aide fixations (vis ou rivets), et d'autre part, en partie basse, à une poutre longitudinale inférieure et / ou à un bord inférieur de la deuxième structure 51 au moyen de fixations (vis ou rivets).

Au niveau d'un côté amont 53, la structure 51 est liée rigidement à une paroi externe de la section d'entrée d'air 3 de manière à assurer la continuité aérodynamique extérieure de la nacelle.

De la même manière, au niveau d'un côté aval 54, la structure 51 est liée rigidement à une paroi externe de la section aval 9.

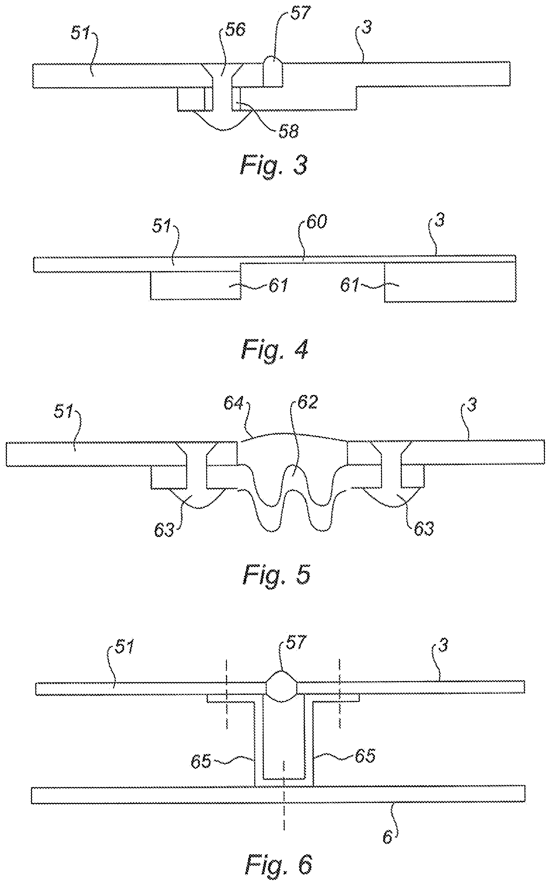

Les moyens de fixation ne sont pas représentés et des exemples particuliers sont détaillés sur les figures 3 à 6.

Conformément à un aspect complémentaire de l'invention, les structures 51 comprennent une ou plusieurs trappes 55 d'accès à l'intérieur de la nacelle. Les emplacements et dimensions de ces trappes seront déterminés en fonction des organes auxquels un opérateur souhaiterait accéder sans avoir à déposer complètement la structure 51.

On pourra avantageusement prévoir des trappes 55 à proximité d'une zone supérieure dite douze heures et / ou inférieure dite six heures et / ou sensiblement médiane.

Selon un premier mode de réalisation, représenté schématiquement sur la figure 3, la structure 51 est rattaché à la paroi de la section d'entrée d'air 3 à l'aide d'une pluralité de rivets ou boulons 56. Un Cordon périphérique de mastic 57 assure l'interface et la continuïté aérodynamique entre les deux structures.

Afin de permettre un léger glissement des structures l'une par rapport à l'autre, les rivets 56 sont montés avec un léger jeu 58. Par ailleurs, le choix du rivet 56 sera tel que sa rension d'installation est limitée et permet en cas de charge importante le glissement relatif des deux structures.

Selon un deuxième mode de réalisation, représenté schématiquement sur la figure 4, la structure 51 est rattaché à la paroi de la section d'entrée d'air 3 par l'intermédiaire d'une zone de flambage 60, qui peut être intégrée à l'une, l'autre ou les deux structures, cette zone de flambage 60 correspondant à une section de faible épaisseur apte à flamber sous des charges correspondant, notamment à un accident de perte d'aube 19, mais résistante aux charges de vol normales.

Afin d'assurer une parfaite délimitation de la section de flambage 60, cette dernière pourra être encadrée de raidisseurs 61, appartenant notamment à la structure 51 et / ou à la paroi de la section d'entrée d'air 3.

Selon un troisième mode de réalisation, représenté schématiquement sur la figure 5, la structure 51 est rattaché à la paroi de la section d'entrée d'air 3 par l'intermédiaire d'une liaison souple 62, elle-même rattachée à chaque structure par des rivets 63.

Un cordon 64 périphérique externe assurera la continuité aérodynamique et l'étanchéité entre les deux structures.

Cette liaison souple sera conçue pour ne amortir les charges et ne pas transmettre de charges importantes significatives. Cette pièce de liaison pourra être réalisée à partir d'un caoutchouc synthétique (silicone par exemple) renforcé de fibres de verre (ou toute fibre équivalente).

Selon un quatrième mode de réalisation, représenté schématiquement sur la figure 6, la structure 51 est rattaché à la paroi de la section d'entrée d'air 3 par l'intermédiaire de raidisseurs 57 en forme d'équerre également lié au carter 6.

Ainsi, les charges transitant par l'interface section d'entrée d'air 3 / structures 51 sont reprises principalement par le carter 6 et non transmises à l'autre structure.

La portée de l'invention est définie par les revendications annexées.

## Revendications

1. Nacelle (1) pour turboréacteur, comprenant une entrée d'air (3) en amont du turboréacteur, une section médiane (5) destinée à entourer une soufflante (7) de turboréacteur et son carter (6), et une section aval (9), la section médiane étant réalisée à partir d'au moins une structure (51) apte à assurer une continuité aérodynamique externe de la nacelle, ladite structure (51) est liée à une paroi de l'entrée d'air (3) de manière à former une structure non ouvrable par pivotement relativement à ladite paroi d'entrée d'air (3), ladite structure (51) étant liée à ladite paroi d'entrée d'air (3) de manière amovible pour pouvoir être démontée en cas d'opération de maintenance, **caractérisée en ce que** ladite structure (51) est liée à ladite paroi d'entrée d'air (3) par l'intermédiaire :
- d'au moins une zone de flambage (60) local apte à résister à des charges normales en vol mais flambant en cas de surcharges, et/ou
- d'une liaison souple (62) apte à amortir les passages d'efforts de manière à limiter le passage de charges significatives, et/ou
- d'un ou plusieurs raidisseurs (65) pour être reliées audit carter (6) de soufflante (7).

2. Nacelle (1) selon la revendication 1, **caractérisée en ce que** la structure (51) comprend une ou plusieurs trappes (55) permettant un accès à l'intérieur de la nacelle situées à proximité d'une zone supérieure dite douze heures et / ou inférieure dite six heures et / ou sensiblement médiane.

3. Nacelle (1) selon l'une quelconque des revendications 1 ou 2, **caractérisée en ce qu'**elle comprend deux structures (51), notamment sensiblement hémicylindriques, disposées de part et d'autre d'un axe sensiblement longitudinal de la nacelle.

4. Nacelle (1) selon l'une quelconque des revendications 1 à 3, **caractérisée en ce que** la structure (51) est liée à une autre structure (51), notamment en partie inférieure.

5. Nacelle (1) selon l'une quelconque des revendications 1 à 4, **caractérisée en ce que** la section aval (9) est équipée d'un dispositif d'inversion de poussée.

6. Nacelle (1) selon l'une quelconque des revendications 1 à 5, **caractérisée en ce que** la structure (51) est liée à la paroi d'entrée d'air (3) au moyen de rivets (56) ou vis et montées avec jeu (58) entre ladite structure (51) et ladite paroi d'entrée d'air (3).

7. Nacelle (1) selon l'une quelconque des revendications 1 à 6, dans laquelle ladite structure (51) est liée à ladite paroi d'entrée d'air (3) par l'intermédiaire d'au moins une zone de flambage (60) local, **caractérisée en ce que** la zone de flambage (60) est associée à au moins un raidisseur (61), et plus particulièrement deux encadrant la zone de flambage.

## Patentansprüche

1. Gondel (1) für Turbinenluftstrahltriebwerk, die einen Lufteingang (3) stromaufwärts des Turbinenluftstrahltriebwerks, einen Mittenabschnitt (5), der dazu bestimmt ist, ein Turbinenluftstrahltriebwerkgebläse (7) und sein Gehäuse (6) zu umgeben, und einen stromabwärtigen Abschnitt (9) umfasst, wobei der Mittenabschnitt ausgehend von mindestens einer Struktur (51) hergestellt ist, die geeignet ist, um eine externe aerodynamische Kontinuität der Gondel sicherzustellen, wobei die Struktur (51) mit einer Wand des Lufteingangs (3) derart verbunden ist, dass eine Struktur, die nicht durch Schwenken bezüglich der Wand des Lufteingangs (3) geöffnet werden kann, gebildet wird, wobei die Struktur (51) mit der Wand des Lufteingangs (3) auf abnehmbare Art verbunden ist, um im Fall eines Wartungsvorgangs demontiert werden zu können,
**dadurch gekennzeichnet, dass** die Struktur (51) mit der Wand des Lufteingangs (3) verbunden ist über:
- mindestens eine lokale Knickzone (60), die geeignet ist, um normalen Belastungen beim Flug standzuhalten, aber bei Überlasten zu knicken, und/oder
- eine biegsame Verbindung (62), die geeignet ist, um die Passagen von Kräften derart zu dämpfen, dass die Passage signifikanter Lasten beschränkt wird, und/oder
- einen oder mehrere Versteifer (65), um mit dem Gehäuse (6) des Gebläses (7) verbunden zu sein.

2. Gondel (1) nach Anspruch 1, **dadurch gekennzeichnet, dass** die Struktur (51) eine oder mehrere Klappen (55) umfasst, die einen Zugang zu dem Inneren der Gondel erlauben, die in Nähe einer oberen, Zwölfuhrzone genannt, und/oder einer unteren, Sechsuhrzone genannt, und/oder im Wesentlichen mittleren Zone liegen.

3. Gondel (1) nach einem der Ansprüche 1 oder 2, **dadurch gekennzeichnet, dass** sie zwei Strukturen (51) umfasst, die insbesondere im Wesentlichen halbzylindrisch sind, die an jeder Seite einer im Wesentlichen länglichen Achse der Gondel angeordnet sind.

4. Gondel (1) nach einem der Ansprüche 1 bis 3, **dadurch gekennzeichnet, dass** die Struktur (51) mit einer anderen Struktur (51) insbesondere im unteren Teil verbunden ist.

5. Gondel (1) nach einem der Ansprüche 1 bis 4, **dadurch gekennzeichnet, dass** der stromabwärtige Abschnitt (9) mit einer Schubumkehrvorrichtung ausgestattet ist.

6. Gondel (1) nach einem der Ansprüche 1 bis 5, **dadurch gekennzeichnet, dass** die Struktur (51) mit der Wand des Lufteingangs (3) mittels Nieten (56) oder Schrauben verbunden ist und mit einem Spiel (58) zwischen der Struktur (51) und der Wand des Lufteingangs (3) montiert ist.

7. Gondel (1) nach einem der Ansprüche 1 bis 6, wobei die Struktur (51) mit der Wand des Lufteingangs (3) über mindestens eine lokale Knickzone (60) verbunden ist, **dadurch gekennzeichnet, dass** die Knickzone (60) mit mindestens einem Versteifer (61), und insbesondere mit zwei, die die Knickzone einrahmen, assoziiert ist.

## Claims

1. A nacelle (1) for a turbojet engine, comprising an air inlet (3) upstream of the turbojet engine, a median section (5) intended to surround a turbojet engine fan (7) and the casing (6) thereof, and a downstream section (9), the median section being made from at least one structure (51) capable of ensuring an external aerodynamic continuity of the nacelle, said structure (51) is linked to a wall of the air inlet (3) so as to form a structure which cannot be opened by pivoting relative to said air inlet wall (3), said structure (51) being removably linked to said air inlet wall (3) in order to be able to be disassembled in case of a maintenance operation, **characterized in that** said structure (51) is linked to said air inlet wall (3) via:
- at least one local buckling area (60) capable of resisting normal loads in flight, but buckling in case of overloads, and/or
- a flexible linkage (62) capable of dampening the passages of forces so as to limit the passage of significant loads, and/or
- one or several stiffener(s) (65) to be connected to said fan (7) casing (6).

2. The nacelle (1) according to claim 1, **characterized in that** the structure (51) comprises one or several hatch(es) (55) enabling access to the inside of the nacelle located proximate to an upper area called 12 O'clock area and/or a lower area called 6 O'clock area and/or a substantially median area.

3. The nacelle (1) according to any one of claims 1 or 2, **characterized in that** it comprises two structures (51), in particular substantially semi-cylindrical, disposed on either side of a substantially longitudinal axis of the nacelle.

4. The nacelle (1) according to any one of claims 1 to 3, **characterized in that** the structure (51) is linked to another structure (51) in particular in the lower portion.

5. The nacelle (1) according to any one of claims 1 to 4, **characterized in that** the downstream section (9) is equipped with a thrust reverser device.

6. The nacelle (1) according to any one of claims 1 to 5, **characterized in that** the structure (51) is linked to the air inlet wall (3) by means of rivets (56) or screws and mounted with a clearance (58) between said structure (51) and said air inlet wall (3).

7. The nacelle (1) according to any one of claims 1 to 6, wherein said structure (51) is linked to said air inlet wall (3) via at least one local buckling area (60), **characterized in that** the buckling area (60) is associated to at least one stiffener (61), and more particularly two stiffeners surrounding the buckling area.
